# EUROPÄISCHE PATENTSCHRIFT

(11) **EP 1 502 038 B1**
(45) Veröffentlichungstag und Bekanntmachung des Hinweises auf die Patenterteilung: **10.05.2006**
(21) Anmeldenummer: 03722518.2
(22) Anmeldetag: 22.04.2003
(51) Int. Cl.: F16F 1/38

(54) **RUNDLAGER**
ANNULAR BEARING
PALIERS RONDS

(30) Priorität: 23.04.2002 DE 20206418 U
(43) Veröffentlichungstag der Anmeldung: 02.02.2005
(73) Patentinhaber: BASF Aktiengesellschaft, 67056 Ludwigshafen (DE)
(72) Erfinder: WULF, Andreas, 49406 Barnstorf (DE); HAUPT, Stefan, 49082 Osnabrück (DE); HALLIER, Christian, 49076 Osnabrück (DE)
(86) Internationale Anmeldenummer: PCT/EP2003/004135
(87) Internationale Veröffentlichungsnummer: WO 2003/091594

(56) Entgegenhaltungen:
- EP-A- 0 353 347
- EP-A- 1 132 642
- DE-A- 3 536 283
- GB-A- 1 571 575
- US-A- 2 958 526
- US-A- 3 971 550
- US-A- 5 489 087
- US-A1- 2001 040 326
- PATENT ABSTRACTS OF JAPAN vol. 015, no. 006 (M-1066), 8. Januar 1991 (1991-01-08) & JP 02 256934 A (TOKAI RUBBER IND LTD), 17. Oktober 1990 (1990-10-17)
- PATENT ABSTRACTS OF JAPAN vol. 1998, no. 11, 30. September 1998 (1998-09-30) & JP 10 169711 A (TOYODA GOSEI CO LTD), 26. Juni 1998 (1998-06-26)

## Beschreibung

Die Erfindung betrifft Rundlager nach dem Oberbegriff von Anspruch 1, beispielsweise Rundlager enthaltend bevorzugt zylindrische (i) Außenbuchse, mindestens zwei bevorzugt zylindrische (ii) Lagerelemente auf der Basis von Elastomeren, bevorzugt von zelligen Polyisocyanat-Polyadditionsprodukten, bevorzugt auf der Basis von zelligen Polyurethanelastomeren, die ggf. Polyharnstoffstrukturen enthalten können, besonders bevorzugt auf der Basis von zelligen Polyurethanelastomeren bevorzugt mit einer Dichte nach DIN 53 420 von 200 bis 1100, bevorzugt 300 bis 800 kg/m³, einer Zugfestigkeit nach DIN 53 571 von ≥ 2, bevorzugt 2 bis 8 N/mm², einer Dehnung nach DIN 53 571 von ≥ 300, bevorzugt 300 bis 700 % und einer Weiterreißfestigkeit nach DIN 53 515 von ≥ 8, bevorzugt 8 bis 25 N/mm, die bevorzugt von der Außenbuchse umfasst werden, und eine bevorzugt zylindrische (iii) hohle Innenbuchse, die bevorzugt in dem Lagerelement (ii) positioniert ist. Außerdem betrifft die Erfindung Automobile enthaltend die erfindungsgemäßen Rundlager, insbesondere in der Anbindung des Stoßdämpfers an die Karosserie, in der Anbindung von Lenkern oder in der Anbindung von Getriebelager, Motorlager oder Hilfsrahmenlager an die Karosserie.

Das Document US-A-5489 087 seigt die Mertinale des Oberbegriffs von Anspruch 1.

Rundlager werden in Automobilen innerhalb des Fahrwerks verwendet und sind allgemein bekannt. Sie werden insbesondere in Kraftfahrzeugen als schwingungsdämpfende Federelemente eingesetzt. Dabei übernehmen die Federelemente die Anbindung des Stoßdämpfers an die Karosserie oder anderer Fahrwerkskomponenten wie Lenker aller Art oder Aggregatelager wie Getriebelager, Motorlager oder Hilfsrahmenlager. Durch eine solche elastische Ankopplung werden Schwingungen isoliert, die von der Fahrbahn hervorgerufen und über Rad und Stoßdämpfer weitergeleitet werden und Schwingungen die vom Stoßdämpfer hervorgerufen werden. Die Ankopplung wird so gestaltet, dass kardanische Bewegungen beispielsweise des Stoßdämpfers oder anderer Fahrwerkskomponenten ermöglicht werden und die Anforderungen an Kraft-Weg-Kennungen in axialer, radialer und kardanischer Richtung erfüllt werden. Radiale Kennungen beeinflussen in Abhängigkeit von der Fahrwerkskonzeption wesentlich das Fahrverhalten und müssen exakt abgestimmt werden. Das Zusammenspiel beispielsweise des Stoßdämpfers und Rundlager stellt die folgenden Funktionen sicher:
- Fahrkomfort
- Fahrsicherheit
- Wank-/Nickabstützung
- Reduktion von Effekten des Radstuckerns und Karosseriezitterns

Andere Fahrwerkskomponenten wie z.B. Lenkerlager haben ebenfalls wesentlichen Einfluss auf Fahrkomfort und sind sicherheitsrelevante Bauteile. Die Bauteile können dabei radführende Eigenschaften übernehmen. Weiter können sich diese Bauteile durch eine unterschiedliche Kraft-Wegkennung in Fahrzeug Längs- bzw. Querrichtung auszeichnen.

Aufgrund der sehr unterschiedlichen Charakteristika und Eigenschaften einzelner Automobilmodelle müssen die Rundlager individuell an die verschiedenen Automobilmodelle angepasst werden, um eine ideale Fahrwerksabstimmung zu erreichen. Beispielsweise können bei der Entwicklung der Rundlager das Gewicht des Fahrzeugs, das Fahrwerk des speziellen Modells, die vorgesehenen Stoßdämpfer sowie die gewünschte Federcharakteristik berücksichtigt werden. Hinzu kommt, dass für verschiedene Automobile aufgrund des zur Verfügung stehenden Bauraums individuelle, auf die Baukonstruktion abgestimmte Einzellösungen erfunden werden müssen.

Aus den vorstehend genannten Gründen können die bekannten Lösungen für die Ausgestaltung einzelner Rundlager nicht generell auf neue Automobilmodelle übertragen werden. Bei jeder neuen Entwicklung eines Automobilmodells muss ein neues Rundlager entwickelt werden, das den spezifischen Anforderungen des Modells gerecht wird.

Aufgabe der vorliegenden Erfindung war es somit, für ein spezielles, neues Automobilmodell ein geeignetes Rundlager mit den oben genannten Funktionen zu entwickeln, die den spezifischen Anforderungen gerade dieses Modells gerecht wird und einen möglichst guten Fahrkomfort und eine ausgezeichnete Fahrsicherheit gewährleistet. Zudem ist es wichtig, eine geringe Verdrehsteifigkeit zu realisieren um beispielsweise bei der Anwendung als Dämpferlager eine hohe Lebensdauer des Dämpfers zu gewährleisten.

Diese Aufgabe wird durch ein Rundlager nach Auspruch 1 gelöst.

Mit Hilfe von Rundlagern werden im Automobil Aggregate, Fahrwerksbauteile u.a. untereinander oder mit der Karosserie verbunden. Dabei erfüllen sie durch die Verwendung von Elastomerwerkstoffen die Funktion der elastischen Lagerung; andererseits sind sie auf Grund ihrer viskosen Eigenschaften in der Lage, Energie zu dissipieren und damit Schwingungen zu dämpfen. Dabei wird ein hohes Maß an Dämpfung besonders für die Bedämpfung großer Amplituden von niederfrequenten Schwingungen benötigt, die z.B. die Anbindung der Stoßdämpfers an die Karosserie beeinflussen. Andererseits ist bei kleinen Amplituden und höheren Frequenzen eine hohe Dämpfung aus Gründen der Fahrzeugakustik unerwünscht. Das Dämpfungsverhalten derzeitiger, konventioneller Rundlager ist abhängig vom intrinsischen Dämpfungsvermögen des eingesetzten Elastomerwerkstoffes.

Bei sog. Hydrolagern wird das Dämpfungsvermögen mit Hilfe fluiddynamischer Effekte zum einen erheblich erhöht. Andererseits kann durch die Konstruktion des Lagers die Dämpfung auf bestimmte Amplituden abgestimmt werden. Hydrolager sind baulich komplexe Bauteile und stehen aus wirtschaftlicher Sicht den konventionellen Lagern nach. (Kosten)

Bevorzugt sind die mindestens zwei Lagerelemente (ii) nicht mit Haftvermittlern verbunden. Dies lässt die gezielte Nutzung der Festkörperreibung zwischen den Lagerwerkstoffen und den umliegenden Begrenzungen zu. Die Nutzung der Festkörperreibung kann häufig bei Lagern auf Gummibasis nicht genutzt werden, weil herkömmliche Gummiwerkstoffe einem erheblichen abrasiven Verschleiß unterliegen. Elastomerwerkstoffe auf Basis Polyurethan-Elastomere zeigen eine erheblich vergrößerte Resistenz gegenüber abrasivem Verschleiß, so dass die Nutzung dies Dämpfungseffektes vielversprechend erscheint. Durch den Effekt der Festkörperreibung ist es ebenfalls möglich, dem System abhängig von der Amplitude der Erregung Dämpfung zu zuführen. Gerade für radial belastete Rundlager wird ein besonderer Vorteil erzielt. Die Nutzung des Effektes der Dämpfung bei Festkörperreibung beruht auf der Relativbewegung zwischen Innenbuchse, Lagerelementen und der Außenbuchse während der Beanspruchung. Die dadurch entstehende Reibung führt dem System zusätzlich Dämpfung zu. Durch eine spezielle Konturgestaltung kann die Dämpfung durch Reibeffekte verändert werden. Die amplitudenselektive Dämpfung kann somit ähnlich einem Hydrolager eingestellt werden und kann an vergleichbaren Lagerstellen verbaut werden. Die geringe Verdrehsteifigkeit der Erfindung, reduziert beispielsweise bei der Lagerung eines Stoßdämpfers, die Kräfte auf Stoßdämpferkolben und Dichtungen. Dadurch wird die Lebensdauer dieses Bauteils verlängert.

Unter dem Ausdruck "nicht mit Haftvermittlern verbunden" ist z.B. zu verstehen, dass keine physikalische oder chemische Verbindung zwischen den Teilen auftreten, insbesondere ist darunter zu verstehen, dass die Teile nicht verklebt sind. Unter Haftvermittlern sind insbesondere allgemeine bekannte Klebstoffe zu verstehen.

Erfindungsgemäβ werden die Lagerelemente (ii) passgenau in der Außenbuchse (i) und die Innenbuchse (iii) passgenau im Gesamtlagerelement aufgebaut aus den einzelnen Lagerelementen (ii) positioniert, so dass die Teile derart zueinander fixiert sind, dass das gesamte Gesamtlagerelement bestehend aus den einzelnen Lagerelementen (ii) sowohl an Außenbuchse (i) als auch an Innenbuchse (iii) reibt. Zur Gestaltung der Innenbuchse (iii) in Ausführungsbeispielen ist folgendes auszuführen:

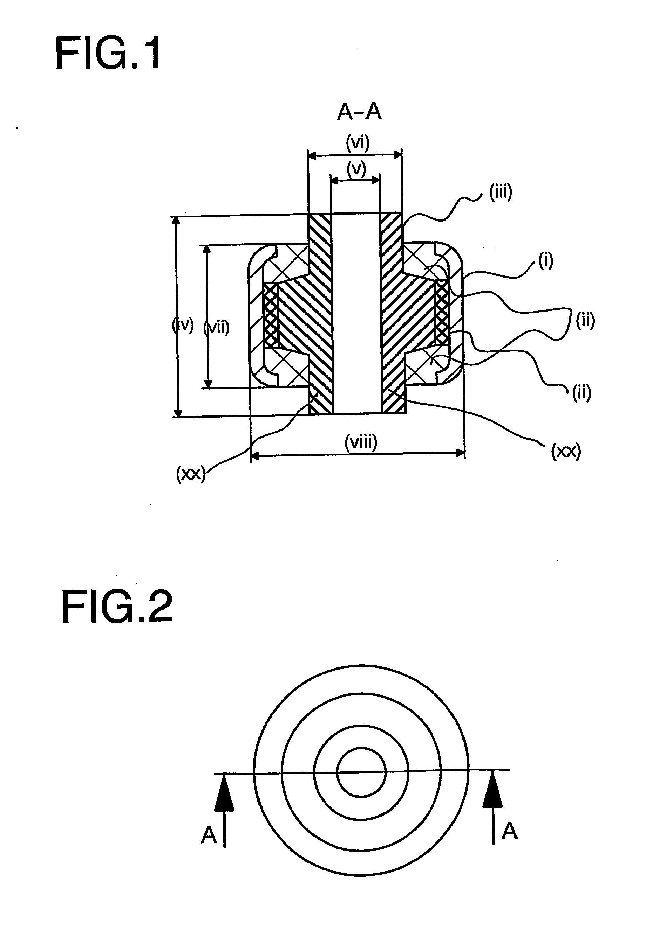

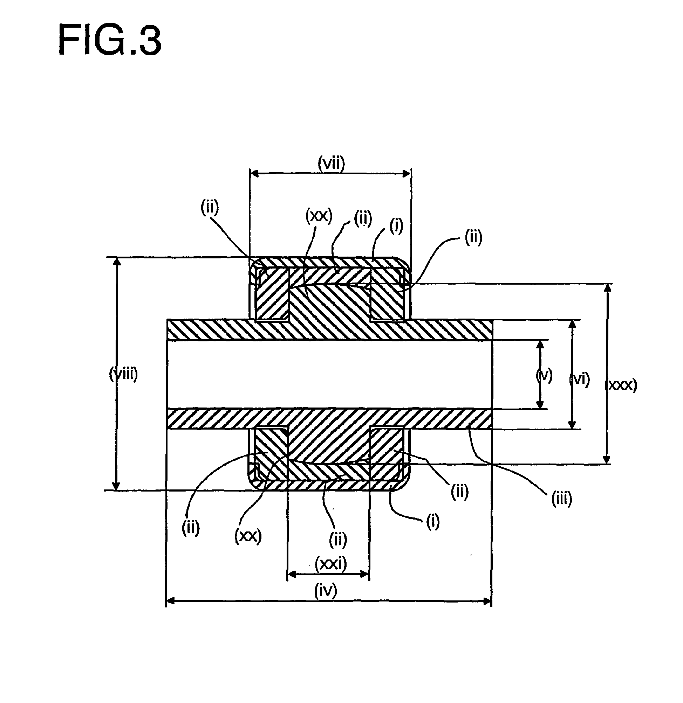

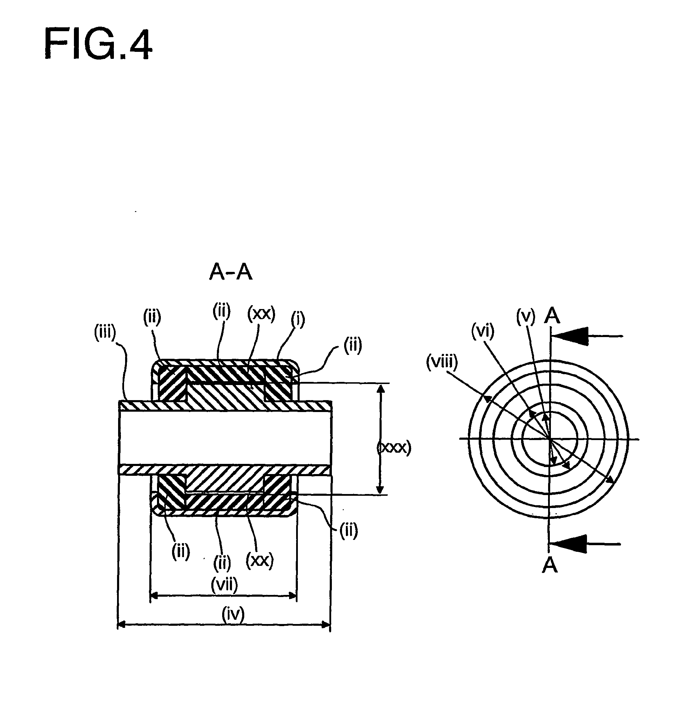

Die Innenbuchse (iii), die beispielsweise aus üblichen Metallen, z.B. Stahl, Eisen, Aluminium oder anderen bekannten Konstruktionswerkstoffen bestehen kann, verfügt über eine Innenbohrung üblicherweise zur Aufnahme eines Befestigungsbolzen. Der Außendurchmesser ergibt sich aus Festigkeitsgründen. Der aufgesetzte Kragen kann im Durchmesser, Dicke, Ausführung und Anzahl variieren. Der Kragen bildet bei radialer Belastung an den Flanken die bevorzugte Reibfläche und an der Stirnseite die Wegbegrenzung bei der Einfederung. Diese Kontur bietet ebenfalls eine besonders vorteilhafte Charakteristik bei auftretenden kardanischen Belastungen. Der Kragen, der um die gesamte Innenbuchse läuft, ist in den Figuren 1, 3 und 4 mit (xx) gekennzeichnet. Der Kragen weist bevorzugt eine Höhe (xxi) zwischen 5 mm und 25 mm, besonders bevorzugt zwischen 10 mm und 25 mm, insbesondere zwischen 12 mm und 15 mm auf. Die Höhe (iv) der hohlen Innenbuchse (iii) beträgt bevorzugt 45 mm bis 50 mm, besonders bevorzugt 46 mm bis 49 mm, insbesondere 47,5 mm oder 47,9 mm. Der Durchmesser (v) des Hohlraums der hohlen Innenbuchse beträgt bevorzugt 10 mm bis 13 mm, besonders bevorzugt 11 mm bis 13 mm. Die hohle Innenbuchse (iii) weist bevorzugt einen Durchmesser (vi), d.h. ohne den aufgesetzten Kragen, von 10 mm bis 24 mm, bevorzugt 20 mm bis 24 mm, besonders bevorzugt 16 mm bis 23 mm, insbesondere 22 mm oder 16,4 mm oder 17 mm auf. In Höhe des Kragens (xx) weist die Innenbuchse (iii) bevorzugt einen Durchmesser (xxx) zwischen 20 mm und 40 mm auf.

Die Lagerelemente weisen folgende bevorzugte Merkmale auf:

Das gesamte Lagerelement ist vaus einzelnen, erfindungsgemäß mindestens zwei, bevorzugt zwei bis zehn, besonders bevorzugt zwei bis fünf, insbesondere zwei oder drei Lagerelementen (ii). In der Figur 1 ist beispielhaft ein Rundlager dargestellt, das auf zwei Lagerelementen (ii) basiert. Die beiden Lagerelemente (ii) sind in der Zeichnung 1 jeweils mit (ii) gekennzeichnet. Die einzelnen Lagerelemente können je nach Anforderung quasi in einem Stecksystem zum vollständigen Lagerelement zusammengefügt werden, wobei allgemein bekannten "Steck"-Verfahren gewählt werden können, z.B. Nut-Feder. Damit können Lagerelemente mit unterschiedlichen Eigenschaften verwendet werden, die je nach ihrer Anordnung im Rundlager spezifische Anforderungen übernehmen können. Die Lagerelemente (ii) weisen bevorzugt unterschiedliche Dichten und somit unterschiedliche mechanische und dynamische Eigenschaften auf. Während beispielsweise ein Lagerelement (ii) aus einem mikrozelligen PUR mit geringer Dichte bestehen kann um im Einsatzfall durch die Relativbewegung zur Innen -und Außenbuchse viel Dämpfung zu erzeugen, kann ein weiteren Lagerelement (ii) im Rundlager aus einem mikrozelligen PUR mit hoher Dichte gefertigt sein, um dynamische Steifigkeiten zu gewährleisten und um die max. Verformung zu reduzieren. Erfindungsgemäß kann somit auf spezielle Anforderungen eingegangen werden. Es ist ebenfalls möglich, das Lagerelement (ii) aus mehreren Lagerelementen, z.B. Halbschalen oder Viertelschalen, herzustellen, um so eine unterschiedliche Kennung in Fahrzeuglängs- und Querrichtung zu erzielen. Dies ist bei der herkömmlichen Fertigung solcher Lager nicht zu realisieren. Die erfindungsgemäßen Lagerelemente (ii) basieren bevorzugt auf Elastomeren auf der Basis von Polyisocyanat-Polyadditionsprodukten, beispielsweise Polyurethanen und/oder Polyharnstoffen, beispielsweise Polyurethanelastomeren, die gegebenenfalls Harnstoffstrukturen enthalten können. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771. Bevorzugt weisen die zelligen Polyisocyanat-Polyadditionsprodukten einen Druckverformungsrest kleiner 25 % nach DIN 53572, wobei als Prüfkörper Würfel der Abmessung 40 mm x 40 mm x 30 mm ohne Silikonanstrich verwendet werden, die Prüfung bei konstanter Verformung erfolgt, wobei die Prüfkörper um 40 % zusammengedrückt und 22 Stunden bei 80°C im Umluftschrank gehalten werden, die Prüfeinrichtung nach der Entnahme aus dem Wärmeschrank 2 Stunden im zusammengedrückten Zustand auf Raumtemperatur abgekühlt wird, anschließend der Prüfkörper aus der Prüfeinrichtung entnommen wird und 10 min ± 30 s nach der Entnahme der Prüfkörper aus der Prüfeinrichtung die Höhe der Prüfkörper auf 0,1 mm genau gemessen wird. Die Lagerelemente (ii) werden erfindungsgemäß derart positioniert, dass mindestens ein Lagerelement zwischen Kragen (xx) und Außenbuchse (i) liegt und zwei weitere Lagerelemente (ii) oberhalb und unterhalb des Kragens zwischen Innenbuchse (iii) und Außenbuchse (i) positioniert sind.

Zur Gestaltung der Außenbuchse in Ausführungsbeispielen ist folgendes auszuführen:

Die Außenbuchse (i), die beispielsweise aus üblichen Metallen, z.B. Stahl, Eisen, Aluminium und/oder anderen bekannten Konstruktionswerkstoffen bestehen kann, verfügt über einen Außendurchmesser und einen Innendurchmesser, die in den Abmaßen und Ausführungen variieren können. Die Erfindung umfasst sowohl kalibrierte und unkalibrierte Buchsen. Eine Fixierung der Einzelteile, d.h. Innenbuchse (iii), Lagerelement(e) (ii) und Außenbuchse (i) kann beispielsweise durch eine Kalibrierung erreicht werden. Beispielsweise können bei dem Zusammenbau die Einzelteile in die Außenbuchse zusammengefügt werden, wobei der Außendurchmesser der Innenbuchse geringfügig kleiner als der Innendurchmesser der Außenbuchse ist. Nachdem alle Teile zusammen gefügt sind, kann anschließend die Außenbuchse im Durchmesser kleiner kalibriert werden, wodurch die eingesetzten Teile zueinander fixiert werden. Bevorzugt weist die Außenbuchse (i) eine Höhe (vii) von 20 mm bis 35 mm, bevorzugt 31 mm bis 35 mm, besonders bevorzugt 32 mm bis 34 mm, insbesondere 33 mm oder 24 mm auf. Der Durchmesser (viii) der Außenbuchse (i) beträgt bevorzugt 30 mm bis 51 mm, bevorzugt 47 mm bis 54 mm, besonders bevorzugt 48 mm bis 50 mm, insbesondere 49 mm oder 35 mm. Die Außenbuchse kann auch so ausgeführt sein, daß sie vor einem einteiligen oder mehrteiligen Umformungsprozess zur endgültigen Formgebung mit den Elastomerwerkstoffen und der Innenbuchse komplettiert wird. Die Elastomerteile können einen größeren Außendurchmesser haben als der Innendurchmesser der Außenbuchse. Dadurch wird eine Vorspannung des Elastomerbauteils erzielt. Bei dieser Bauweise kann auf einen anschließenden Kalibrierprozess verzichtet werden. Diese Vorteile gelten auch, wenn der Innendurchmesser des Elastomerbauteile kleiner ist als der Außendurchmesser der Innenbuchse.

Gerade die räumliche Ausgestaltung der Rundlager, d.h. ihre dreidimensionale Form, hat neben ihrem Material einen entscheidenden Einfluss auf ihre Funktion. Über die Form der Rundlager werden die oben genannten Funktionen gezielt gesteuert. Diese dreidimensionale Form des Rundlagers muss somit individuell für jedes Automobilmodell entwickelt werden.

Besonders bevorzugte Ausführungsformen der erfindungsgemäßen Rundlager sind im Detail in den Figuren 1, 2, 3 und 4 dargestellt. In allen Figuren sind die angegebenen Maße in [mm] angegeben. Gerade diese dreidimensionalen Formen erwiesen sich als besonders geeignet, den spezifischen Anforderungen durch das spezielle Automobilmodell gerecht zu werden, insbesondere auch im Hinblick-auf die spezifischen räumlichen Anforderungen und die geforderte Charakteristik.

Die Herstellung erfolgt üblicherweise durch Umsetzung von Isocyanaten mit gegenüber Isocyanaten reaktiven Verbindungen.

Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten.

Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40 bis 95°C, bevorzugt 50 bis 90°C.

Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden.

Die Formteile sind nach 5 bis 60 Minuten ausgehärtet und damit entformbar.

Die Menge des in das Formwerkzeug eingebrachten Reaktionsgemisches wird üblicherweise so bemessen, dass die erhaltenen Formkörper die bereits dargestellte Dichte aufweisen.

Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die zelligen Polyisocyanat-Polyadditionsprodukte werden zweckmäßigerweise nach dem one shot-Verfahren mit Hilfe der Niederdruck-Technik oder insbesondere der Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweikomponenten-Verfahren zu arbeiten.

Nach einer besonders vorteilhaften Ausführungsform wird in einem zwei-stufigen Prozess zunächst ein NCO-gruppenhaltiges Prepolymeres hergestellt. Dazu wird die Komponente (b) mit (a) im Überschuss üblicherweise bei Temperaturen von 80°C bis 160°C, vorzugsweise von 110°C bis 150°C, zur Reaktion gebracht. Die Reaktionszeit ist auf das Erreichen des theoretischen NCO-Gehaltes bemessen.

Bevorzugt erfolgt demnach die Herstellung der Formkörper in einem zweistufigen Verfahren, indem man in der ersten Stufe durch Umsetzung von (a) mit (b) ein Isocyanatgruppen aufweisendes Prepolymer herstellt und dieses Prepolymer in der zweiten Stufe in einer Form mit einer Vernetzerkomponente enthaltend gegebenenfalls die weiteren eingangs dargestellten Komponenten umsetzt.

Zur Verbesserung der Entformung der Schwihgungsdämpfer hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wässrigen Seifenlösungen, zu beschichten.

Die Formstandzeiten betragen in Abhängigkeit von der Größe und Geometrie des Formteils durchschnittlich 5 bis 60 Minuten.

Nach der Herstellung der Formteile in der Form können die Formteile bevorzugt für eine Dauer von 1 bis 48 Stunden bei Temperaturen von üblicherweise von 70 bis 120°C getempert werden.

Zu den dem Fachmann allgemein bekannten Ausgangskomponenten zur Herstellung der Polyisocyanat-Polyadditionsprodukte kann folgendes ausgeführt werden:

Als Isocyanate (a) können allgemein bekannte (cyclo)aliphatische und/oder aromatische Polyisocyanate eingesetzt werden. Zur Herstellung der erfindungsgemäßen Verbundelemente eignen sich besonders aromatische Diisocyanate, vorzugsweise 2,2'-, 2,4'-und/oder 4,4'-Diphenylmethandiisocyanat (MDI), 1,5-Naphthylendiisocyanat (NDI), 2,4- und/oder 2,6-Toluylendiisocyanat (TDI), 3,3' -Dimethyl-diphenyl-diisocyanat, 1,2-Diphenylethandiisocyanat, Phenylendiisocyanat und/oder aliphatische Isocyanate wie z.B. 1,12-Dodecan-, 2-Ethyl-1,4-butan-, 2-Methyl-1,5-pentan-, 1,4-Butan-diisocyanat und vorzugsweise 1,6-Hexamethylendiisocyanat und/ oder cycloaliphatische Diisocyanate z.B. Cyclohexan-1,3-und 1,4-diisocyanat, 2,4- und 2,6-Hexahydrotoluylen-diisocyanat, 4,4'-, 2,4'- und 2,2'-Dicyclohexylmethan-diisocyanat, vorzugsweise 1-Isocyanato-3,3,5-trimethyl-5-isocyanatomethylcyclohexan und/oder Polyisocyanate wie z.B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden. Bevorzugt werden gegebenenfalls modifiziertes 2,2'-, 2,4'- und/oder 4,4'-Diphenylmethandiisocyanat (MDI), 1,5-Naphthylendiisocyanat (NDI), 3,3'-Dimethyl-diphenyl-diisocyanat, 2,4- und/oder 2,6-Toluylendiisocyanat (TDI) und/oder Mischungen dieser Isocyanate eingesetzt.

Als gegenüber Isocyanaten reaktive Verbindungen (b) können" allgemein bekannte Polyhydroxylverbindungen eingesetzt werden, bevorzugt solche mit einer Funktionalität von 2 bis 3 und bevorzugt einem Molekulargewicht von 60 bis 6000, besonders bevorzugt 500 bis 6000, insbesondere 800 bis 5000. Bevorzugt werden als (b) Polyetherpolyole, Polyesterpolyalkohole und/oder hydroxylgruppenhaltige Polycarbonate eingesetzt.

Bevorzugt werden als (b) Polyesterpolyalkohole, im Folgencten auch als Polyesterpolyole bezeichnet, eingesetzt. Geeignete Polyesterpolyole können beispielsweise aus Dicarbonsäuren mit 2 bis 12 Kohlenstoffatomen und zweiwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische verwendet werden. Zur Herstellung der Polyesterpolyole kann es gegebenenfalls vorteilhaft sein, anstelle der Carbonsäure die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für zweiwertige Alkohole sind Glykole mit 2 bis 16 Kohlenstoffatomen, vorzugsweise 2 bis 6 Kohlenstoffatome, wie z.B. Ethylenglykol, Diethylenglykol, Butandiol-1,4, Pentandiol-1,5, Hexandiol-1,6, Decandiol-1,10, 2-Methylpropan-1,3-diol, 2,2-Dimethyl-propandiol-1,3, Propandiol-1,3 und Dipropylenglykol. Je nach den gewünschten Eigenschaften können die zweiwertigen Alkohole allein oder gegebenenfalls in Mischungen untereinander verwendet werden.

Als Polyesterpolyole vorzugsweise verwendet werden Ethandiolpolyadipate, 1,4-Butandiol-polyadipate, Ethandiol-butandiol-polyadipate, 1,6-Hexandiol-neopentylglykol-polyadipate, 1,6-Hexandiol-1,4-Butandiol-polyadipate, 2-Methyl-1,3-propandiol-1,4-butandiol-polyadipate und/oder Polycaprolactone.

Geeignete estergruppenhaltige Polyoxyalkylenglykole, im wesentlichen Polyoxytetramethylenglykole, sind Polykondensate aus organischen, vorzugsweise aliphatischen Dicarbonsäuren, insbesondere Adipinsäure mit Polyoxymethylenglykolen des zahlenmittleren Molekulargewichtes von 162 bis 600 und gegebenenfalls aliphatischen Diolen, insbesondere Butandiol-1,4. Ebenfalls geeignete estergruppenhaltige Polyoxytetramethylenglykole sind solche aus der Polykondensation mit ε-Caprolacton gebildete Polykondensate.

Geeignete carbonatgruppenhaltige Polyoxyalkylenglykole, im wesentlichen Polyoxytetramethylenglykole, sind Polykondensate aus diesen mit Alkyl- bzw. Arylcarbonaten oder Phosgen.

Beispielhafte Ausführungen zu der Komponente (b) sind in DE-A 195 48 771, Seite 6, Zeilen 26 bis 59 gegeben.

Zusätzlich zu den bereits beschriebenen gegenüber Isocyanaten reaktiven Komponenten können des weiteren niedermolekulare Kettenverlängerungs- und/oder Vernetzungsmitteln (b1) mit einem Molekulargewicht von kleiner 500, bevorzugt 60 bis 499 eingesetzt werden, beispielsweise ausgewählt aus der Gruppe der di- und/oder trifunktionellen Alkohole, di- bis tetrafunktionellen Polyoxyalkylenpolyole und der alkylsubstituierten aromatischen Diamine oder von Mischungen aus mindestens zwei der genannten Kettenverlängerungs- und/oder Vernetzungsmittel.

Als (b1) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z.B. Diethylenglykol und Dipropylenglykol und/oder di- bis tetrafunktionelle Polyoxyalkylen-polyole.

Geeignet sind jedoch auch verzweigtkettige und/oder ungesättigte Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z.B. Terephthalsäure-bis-ethylenglykol-oder -butandiol-1,4, Hydroxyalkylenether des Hydrochinons oder Resorcins, wie z.B. 1,4-Di-(β-hydroxyethyl)-hydrochinon oder 1,3-Di(β-hydroxyethyl)-resorcin, Alkanolamine mit 2 bis 12 Kohlenstoffatomen, wie z.B. Ethanolamin, 2-Aminopropanol und 3-Amino-2,2-dimethylpropanol, N-Alkyldialkanolamine, wie z.B. N-Methyl-und N-Ethyl-diethanolamin.

Als höherfunktionelle Vernetzungsmittel (b1) seien beispielsweise tri- und höherfunktionelle Alkohole, wie z.B. Glycerin, Trimethylolpropan, Pentaerythrit und Trihydroxycyclohexane sowie Trialkanolamine, wie z.B. Triethanolamin genannt.

Als Kettenverlängerungsmittel können verwendet werden: alkylsubstituierte aromatische Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind.

Zur Herstellung der Formkörper können die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet werden.

Zur Erzielung spezieller mechanischer Eigenschaften kann es auch zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylenglykolen zu verwenden.

Bevorzugt werden jedoch keine aromatischen Diamine eingesetzt. Bevorzugt erfolgt die Herstellung der erfindungsgemäßen Produkte somit in Abwesenheit von aromatischen Diaminen.

Die Herstellung der zelligen Polyisocyanat-Polyadditionsprodukte kann bevorzugt in Gegenwart von Wasser (c) durchgeführt werden. Das Wasser wirkt sowohl als Vernetzer unter Bildung von Harnstoffgruppen als auch aufgrund der Reaktion mit Isocyanatgruppen unter Bildung von Kohlendioxid als Treibmittel. Aufgrund dieser doppelten Funktion wird es in dieser Schrift getrennt von (e) und (b) aufgeführt. Per Definition enthalten die Komponenten (b) und (e) somit kein Wasser, das per Definition ausschließlich als (c) aufgeführt wird.

Die Wassermengen, die zweckmäßigerweise verwendet werden können, betragen 0,01 bis 5 Gew.-%, vorzugsweise 0,3 bis 3,0 Gew.-%, bezogen auf das Gewicht der Komponente (b). Das Wasser kann vollständig oder teilweise in Form der wässrigen Lösungen der sulfonierten Fettsäuren eingesetzt werden.

Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (d) zugefügt werden. Die Katalysatoren (d) können einzeln wie auch in Abmischung miteinander zugegeben werden. Vorzugsweise sind dies metallorganische Verbindungen, wie Zinn-(II)-Salze von organischen Carbonsäuren, z.B. Zinn-(II)-dioctoat, Zinn-(II)-dilaurat, Dibutylzinndiacetat und Dibutylzinndilaurat und tertiäre Amine wie Tetramethylethylendiamin, N-Methylmorpholin, Diethylbenzylamin, Triethylamin, Dimethylcyclohexylamin, Diazabicyclooctan, N,N'-Dimethylpiperazin, N-Methy-N'-(4-N-Dimethylamino-)Butyl-piperazin, N,N,N',N",N"-Pentamethyldiethylendiamin oder ähnliche.

Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-Gruppen.

Je nach einzustellender Reaktivität gelangen die Katalysatoren (d) in Mengen von 0,001 bis 0,5 Gew.-%, bezogen auf das Prepolymere, zur Anwendung.

Gegebenenfalls können in der Polyurethanherstellung übliche Treibmittel (e) verwendet werden. Geeignet sind beispielsweise niedrig siedende Flüssigkeiten, die unter dem Einfluss der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung derartiger zellhaltiger elastischer Formkörper aus Harnstoffgruppen gebunden enthaltenden Elastomeren hängt ab von der Dichte, die man erreichen will, sowie von der Menge des bevorzugt mit verwendeten Wassers. Im allgemeinen liefern Mengen von 1 bis 15 Gew.-%, vorzugsweise 2 bis 11 Gew.-%, bezogen auf das Gewicht der Komponente (b), zufriedenstellende Ergebnisse. Besonders bevorzugt wird ausschließlich Wasser (c) als Treibmittel eingesetzt.

Bei der Herstellung der Formteile können Hilfs-und Zusatzstoffe (f) eingesetzt werden. Dazu zählen beispielsweise allgemein bekannte oberflächenaktive Substanzen, Hydrolyseschutzmittel, Füllstoffe, Antioxidantien, Zellregler, Flammschutzmittel sowie Farbstoffe. Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise zu den Emulgatoren zusätzliche Verbindungen mit emulgierender Wirkung, wie die Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol-oder Dinaphthylmethandisulfonsäure. Des weiteren kommen Schaumstabilisatoren in Frage, wie z.B. oxethylierte Alkylphenole, oxethylierte Fettalkohole, Paraffinöle, Ricinusöl- bzw. Ricinolsäureester, Türkischrotöl und Erdnussöl und Zellregler, wie Paraffine und Fettalkohole. Außerdem können als (f) Polysiloxane und/oder Fettsäuresulfonate eingesetzt werden. Als Polysiloxane können allgemein bekannte Verbindungen verwendet werden, beispielsweise Polymethylsiloxane, Polydimethylsiloxane und/oder Polyoxyalkylen-Silikon-Copolymere. Bevorzugt weisen die Polysiloxane eine Viskosität bei 25°C von 20 bis 2000 mPas auf.

Als Fettsäuresulfonate können allgemein bekannte sulfonierte Fettsäuren, die auch kommerziell erhältlich sind, eingesetzt werden. Bevorzugt wird als Fettsäuresulfonat sulfoniertes Rizinusöl eingesetzt.

Die oberflächenaktiven Substanzen werden üblicherweise in Mengen von 0,01 bis 5 Gew.-Teilen, bezogen auf 100 Gew.-Teile der Komponenten (b) angewandt.

## Patentansprüche

1. Rundlager enthaltend (i) Außenbuchse, mindestens zwei (ii) Lagerelemente auf der Basis von Elastomeren, bevorzugt von zelligen Polyisocyanat-Polyadditionsprodukten und eine (iii) hohle Innenbuchse, wobei die Innenbuchse (iii) einen aufgesetzten Kragen (xx) aufweist, der um die gesamte Innenbuchse (iii) läuft und wobei die Lagerelemente (ii) derart positioniert sind, dass mindestens ein Lagerelement (ii) zwischen Kragen (xx) und Außenbuchse (i) liegt und zwei weitere Lagerelemente (ii) oberhalb und unterhalb des Kragens zwischen Innenbuchse (iii) und Außenbuchse (i) positioniert sind, **dadurch gekennzeichnet dass** die Lagerelemente (ii) passgenau in der Außenbuchse (i) und die Innenbuchse (iii) passgenau im Gesamtlagerelement aufgebaut aus den einzelnen Lagerelementen (ii) positioniert sind, so dass die Teile derart zueinander fixiert sind, dass das gesamte Gesamtlagerelement bestehend aus den einzelnen Lagerelementen (11) sowohl an der Außenbuchse (i) als auch an der Inenbuchse an (iii) reibt.

2. Rundlager gemäß Anspruch 1, **dadurch gekennzeichnet, dass** die mindestens zwei Lagerelemente (ii) nicht mit Haftvermittlern verbunden sind.

3. Rundlager gemäß Anspruch 1, **dadurch gekennzeichnet, dass** die mindestens zwei Lagerelemente (ii) unterschiedliche Dichten aufweisen.

4. Rundlager gemäß Anspruch 1, **dadurch gekennzeichnet, dass** die hohle Innenbuchse (iii) eine Höhe (iv) von 45 mm bis 50 mm aufweist.

5. Rundlager gemäß Anspruch 1, **dadurch gekennzeichnet, dass** die hohle Innenbuchse (iii) einen Durchmesser (v) des Hohlraums von 11 mm bis 13 mm aufweist.

6. Rundlager gemäß Anspruch 1, **dadurch gekennzeichnet, dass** die hohle Innenbuchse (iii) einen Durchmesser (vi) von 10 mm bis 24 mm aufweist.

7. Rundlager gemäß Anspruch 1, **dadurch gekennzeichnet, dass** die Außenbuchse (i) eine Höhe (vii) von 20 mm bis 35 mm aufweist.

8. Rundlager gemäß Anspruch 1, **dadurch gekennzeichnet, dass** die Außenbuchse (i) einen Durchmesser (viii) von 30 mm bis 51 mm aufweist.

9. Automobile enthaltend Rundlager gemäß einem der Ansprüche 1 bis 8.

## Claims

1. A round bearing comprising (i) an outer bush, at least two (ii) bearing elements based on elastomers, preferably on cellular polyisocyanate polyadducts, and a (iii) hollow inner bush, the inner bush (iii) having an attached collar (xx) which runs around the entire inner bush (iii) and the bearing elements (ii) being positioned so that at least one bearing element (ii) is located between collar (xx) and outer bush (i) and two further bearing elements (ii) are positioned above and below the collar between inner bush (iii) and outer bush (i), wherein the bearing elements (ii) are positioned with an exact fit in the outer bush (i) and the inner bush (iii) is positioned with an exact fit in the total bearing element composed of the individual bearing elements (ii) so that the parts are fixed to one another in such a way that the total bearing element consisting of the individual bearing elements (ii) rubs both against the outer bush (i) and against the inner bush (iii).

2. The round bearing according to claim 1, wherein the at least two bearing elements (ii) are not bonded by means of adhesion promoters.

3. The round bearing according to claim 1, wherein the at least two bearing elements (ii) have different densities.

4. The round bearing according to claim 1, wherein the hollow inner bush (iii) has a height (iv) of from 45 to 50 mm.

5. The round bearing according to claim 1, wherein the hollow inner bush (iii) has a diameter (v) of the cavity of from 11 to 13 mm.

6. The round bearing according to claim 1, wherein the hollow inner bush (iii) has a diameter of (vi) of from 10 to 24 mm.

7. The round bearing according to claim 1, wherein the outer bush (i) has a height (vii) of from 20 to 35 mm.

8. The round bearing according to claim 1, wherein the outer bush (i) has a diameter (viii) of from 30 to 51 mm.

9. An automobile comprising a round bearing according to any of claims 1 to 8.

## Revendications

1. Palier rond comportant une douille externe (i), au moins deux éléments de palier (ii) à base d'élastomères, de préférence de produits de polyaddition de polyisocyanate cellulaires et une douille interne creuse (iii), dans lequel la douille interne (iii) présente un col rapporté (xx) qui tourne autour de la totalité de la douille interne (iii), les éléments de palier (ii) étant positionnés de sorte qu'au moins un élément de palier (ii) se trouve entre le col (xx) et la douille externe (i) et deux autres éléments de palier (ii) sont positionnés au-dessus et en dessous du col entre la douille interne (iii) et la douille externe (i), **caractérisé en ce que** les éléments de palier (ii) sont positionnés de manière précise dans la douille externe (i) et la douille interne (iii) de manière précise dans l'élément de palier global constitué des différents éléments de palier (ii) de façon que les pièces soient fixées l'une à l'autre de telle sorte que l'élément de palier global constitué des différents éléments de palier (ii) frotte aussi bien sur la douille externe (i) que sur la douille interne (iii) .

2. Palier rond suivant la revendication 1, **caractérisé en ce que** lesdits au moins deux éléments de palier (ii) ne sont pas reliés par des agents adhésifs.

3. Palier rond suivant la revendication 1, **caractérisé en ce que** lesdits au moins deux éléments de palier (ii) présentent des densités différentes.

4. Palier rond suivant la revendication 1, **caractérisé en ce que** la douille interne creuse (iii) présente une hauteur (iv) de 45 mm à 50 mm.

5. Palier rond suivant la revendication 1, **caractérisé en ce que** la douille interne creuse (iii) présente un diamètre (v) de la cavité de 11 mm à 13 mm.

6. Palier rond suivant la revendication 1, **caractérisé en ce que** la douille interne creuse (iii) présente un diamètre (vi) de 10 mm à 24 mm.

7. Palier rond suivant la revendication 1, **caractérisé en ce que** la douille externe (i) présente une hauteur (vii) de 20 mm à 35 mm.

8. Palier rond suivant la revendication 1, **caractérisé en ce que** la douille externe (i) présente un diamètre (viii) de 30 mm à 51 mm.

9. Automobiles comportant un palier rond suivant l'une des revendications 1 à 8.
